# EUROPÄISCHE PATENTSCHRIFT

(11) **EP 1 012 543 B1**
(45) Veröffentlichungstag und Bekanntmachung des Hinweises auf die Patenterteilung: **27.11.2002**
(21) Anmeldenummer: 98954258.4
(22) Anmeldetag: 07.09.1998
(51) Int. Cl.: G01F 23/76

(54) **Verfahren zum Herstellen eines Schwimmers**
Method for producing a float
Procédé de production d'un flotteur

(30) Priorität: 12.09.1997 DE 19740058
(43) Veröffentlichungstag der Anmeldung: 28.06.2000
(73) Patentinhaber: Siemens Aktiengesellschaft, 80333 München (DE)
(72) Erfinder: RAUCHHAUS, Günter, D-65479 Raunheim (DE)
(86) Internationale Anmeldenummer: EP9805661
(87) Internationale Veröffentlichungsnummer: WO99014564

(56) Entgegenhaltungen:
- EP-A- 0 350 185
- DE-A- 3 527 114
- US-A- 3 875 267
- US-A- 5 408 874
- PATENT ABSTRACTS OF JAPAN vol. 010, no. 165 (P-467), 12. Juni 1986 & JP 61 017914 A (ENU BII SHII KOGYO KK), 25. Januar 1986

## Beschreibung

Die Erfindung betrifft ein Verfahren zum Herstellen eines Schwimmers aus einem kraftstoffbeständigen Kunststoff, bei dem eine breiige Masse aus Kunststoff im flüssigen Zustand bei hohem Druck mit einem Treibmittel oder einem das Treibmittel abgebenden Stoff gemischt und anschließend verfestigt wird.

Kraftstoffbeständige Schwimmer für Füllstandssensoren in Kraftstoffbehältern von Kraftfahrzeugen werden häufig aus Nitrophyl gefertigt, da dieses Material das hierfür notwendige geringe spezifische Gewicht und die chemische und physikalische Beständigkeit für Kraftstoffe besitzt. Nachteilig bei dem bekannten Schwimmer ist, daß Nitrophyl aufgrund der aufwendigen Herstellung sehr teuer ist.

Man hat bereits daran gedacht, Nitrophyl durch den besonders preiswerten Kunststoff POM (Polyoxymethylen) zu ersetzen. Zum Herstellen eines Schwimmers aus diesem Material wird bislang ein breiiges Gemisch aus Kunststoff und Treibmittel in eine dem Schwimmer entsprechende Form eingebracht. Hierbei schäumt das Treibmittel den Kunststoff bis zum vollständigen Ausfüllen der Form auf. Nach Verfestigen bzw. Abbinden der Masse kann der fertige Schwimmer entformt werden.

Jedoch lassen sich aus POM mit dem bekannten Verfahren nur Schwimmer mit einem spezifischen Gewicht von mindestens 0,5 erzeugen, so daß diese im Kraftstoff (Wichte 0,7) nur eben schwimmen. Dies ist jedoch bei einem Schwimmer für einen Kraftstoffbehälter eines Kraftfahrzeuges nicht tragbar, da bereits geringe, auf den Schwimmer einwirkende Kräfte zu dessen Abtauchen im Kraftstoff führen. Ein solcher Schwimmer könnte beispielsweise auf den Boden des Kraftstoffbehälters sinken, wenn das Kraftfahrzeug durch eine Bodensenke fährt, und damit die Füllstandsanzeige verfälschen.

Der Erfindung liegt das Problem zugrunde, das eingangs genannte Verfahren zum Herstellen eines Schwimmers weiterzuentwickeln, so daß sich mit diesem ein sehr kostengünstiger Schwimmer mit einem besonders geringen spezifischen Gewicht herstellen läßt.

Das Problem wird erfindungsgemäß dadurch gelöst, daß in dem eingangs genannten Verfahren die Masse in form kleiner Tropfen in einem freien Raum extrudiert und der Schwimmer nachträglich aus der verfestigten extrudierten Masse gefertigt wird.

Das erfindungsgemäße Verfahren benötigt hierdurch keine Form zum Aufschäumen des Schwimmers. Durch Extrudieren der breiigen Masse in den freien Raum kann das Treibmittel (z. B. CO₂) den Kunststoff wesentlich stärker aufschäumen als in einer geschlossenen Form, weil besonders viele und große Einschlüsse in dem sich anschließend verfestigenden Kunststoff entstehen. Die Größe und Anzahl der Einschlüsse läßt sich über den in dem freien Raum herrschenden Gasdruck steuern.

Erfindungsgemäß gefertigte Schwimmer haben ein besonders geringes spezifisches Gewicht. Sie lassen sich deshalb aus einem besonders kostengünstigen und im Verhältnis zu Nitrophyl schwereren Kunststoff fertigen. Beispielsweise weist der aus POM im erfindungsgemäßen Verfahren gefertigte Schwimmer ein spezifisches Gewicht von 0,2 - 0,25 auf. Ein weiterer Vorteil des erfindungsgemäßen Verfahrens besteht darin, daß zum Herstellen des Schwimmers besonders wenig Kunststoff erforderlich ist. Dies führt zu einer weiteren Verringerung der Kosten für den Schwimmer.

Die Herstellung einer Vielzahl von Schwimmern gestaltet sich gemäß einer vorteilhaften Weiterbildung der Erfindung besonders kostengünstig, wenn die breiige Masse zu einem Strang extrudiert wird und anschließend der Gestalt des Schwimmers entsprechende Stücke aus dem verfestigten Strang herausgeschnitten werden.

Mit dem erfindungsgemäßen Verfahren lassen sich nahezu beliebig geformte Schwimmer herstellen, wenn die breiige Masse in Form kleiner Tropfen extrudiert wird und sich anschließend verfestigende Partikel zu der dem Schwimmer entsprechenden Form stoffschlüssig miteinander verbunden werden. Hierbei schäumt das Treibmittel die Tropfen auf, bis diese sich zu den Partikeln verfestigen. Die hierbei entstehenden Partikel weisen eine geschlossene Oberfläche und eine Vielzahl von Einschlüssen aus dem Treibmittel auf. Da die Partikel eine nahezu beliebige Form aufweisen können, hat der hierdurch hergestellte Schwimmer sehr viele und große Einschlüsse mit dem Treibmittel und damit ein besonders geringes spezifisches Gewicht. Beim Verbinden der Partikel miteinander zu der vorgesehenen Form werden zudem Lufteinschlüsse zwischen den Partikeln erzeugt, was eine weitere Verringerung des spezifischen Gewichts des im erfindungsgemäßen Verfahren hergestellten Schwimmers zur Folge hat.

Die Partikel könnten beispielsweise mit einem kraftstoffbeständigen Klebstoff untereinander verklebt werden. Ein dauerhaftes Verkleben ist jedoch bei vielen Kunststoffen nicht möglich. Aus einem Thermoplast gefertigte Partikel lassen sich gemäß einer vorteilhaften Weiterbildung der Erfindung besonders zuverlässig und dauerhaft miteinander verbinden, wenn die Partikel zu der vorgesehenen Form warm verpreßt werden.

Eine Vielzahl von Schwimmern läßt sich gemäß einer anderen vorteilhaften Weiterbildung der Erfindung in einem besonders kostengünstigen kontinuierlichen Prozeß herstellen, wenn die Partikel zu einem Strang verbunden und anschließend der Form des Schwimmers entsprechende Stücke aus dem Strang herausgetrennt werden. Hierdurch ist keine dem Schwimmer entsprechende Form erforderlich.

In der Regel wird der Schwimmer mechanisch nachbearbeitet und zur Aufnahme eines Hebeldrahtes des Füllstandssensors durchbohrt. Hierdurch können mehrere Einschlüsse beschädigt werden und mit Kraftstoff vollaufen. Ein Vollaufen der Einschlüsse mit Kraftstoff läßt sich gemäß einer anderen vorteilhaften Weiterbildung der Erfindung vermeiden, wenn der Schwimmer mit einem kraftstoffbeständigen Kunststoff überzogen wird. Hierdurch werden die Einschlüsse des Schwimmers zuverlässig abgedichtet. Da für den Überzug nur eine geringe Menge Kunststoff erforderlich ist, führt der Einsatz eines hochwertigen und damit kostenintensiven Kunststoffs trotzdem nur zu einer unwesentlichen Erhöhung der Fertigungskosten des Schwimmers. Der Überzug kann beispielsweise durch ein Eintauchen des Schwimmers in verflüssigten Kunststoff oder durch ein Besprühen erzeugt werden. Ein weiterer Vorteil dieser Gestaltung besteht darin, daß nur der für den Überzug verwendete Kunststoff eine dauerhafte chemische und physikalische Beständigkeit gegen Kraftstoff erfordert.

Der mit dem erfindungsgemäßen Verfahren hergestellte Schwimmer hat ein besonders großes Verhältnis der Einschlüsse zu dem Kunststoff, so daß er ein wesentlich geringeres spezifisches Gewicht aufweist als bekannte, in einer geschlossenen Form aufgeschäumte Schwimmer. Dank der Erfindung weist beispielsweise der aus extrudierten Partikel aus POM gefertigte Schwimmer ein spezifisches Gewicht von 0,2 - 0,25 auf. Weiterhin benötigt der Schwimmer durch das große Verhältnis der Einschlüsse zu dem Kunststoff sehr wenig Kunststoff und läßt sich zudem besonders kostengünstig wiederverwerten (Recycling).

Der Schwimmer ist gegen ein Eindringen von Kraftstoff in die Einschlüsse zuverlässig geschützt, wenn er eine Außenhaut aus kraftstoffbeständigem Kunststoff hat.

Da eine sehr geringe Menge eines besonders preiswerten Kunststoffs eingesetzt werden kann, führt die Verwendung der im Extrudierverfahren hergestellten und miteinander verpreßten Partikeln zu einem besonders kostengünstigen Schwimmer.

Die Erfindung läßt zahlreiche Ausführungsformen zu. Zur weiteren Verdeutlichung ihres Grundprinzips ist eine Zeichnung nachfolgend beschrieben: Diese zeigt in
- Figur 1: einen in einem Kraftstoffbehälter angeordneten Schwimmer,
- Figur 2: eine vergrößerte Darstellung des Schwimmers in einem Schnitt entlang der Linie II - II aus Figur 1.

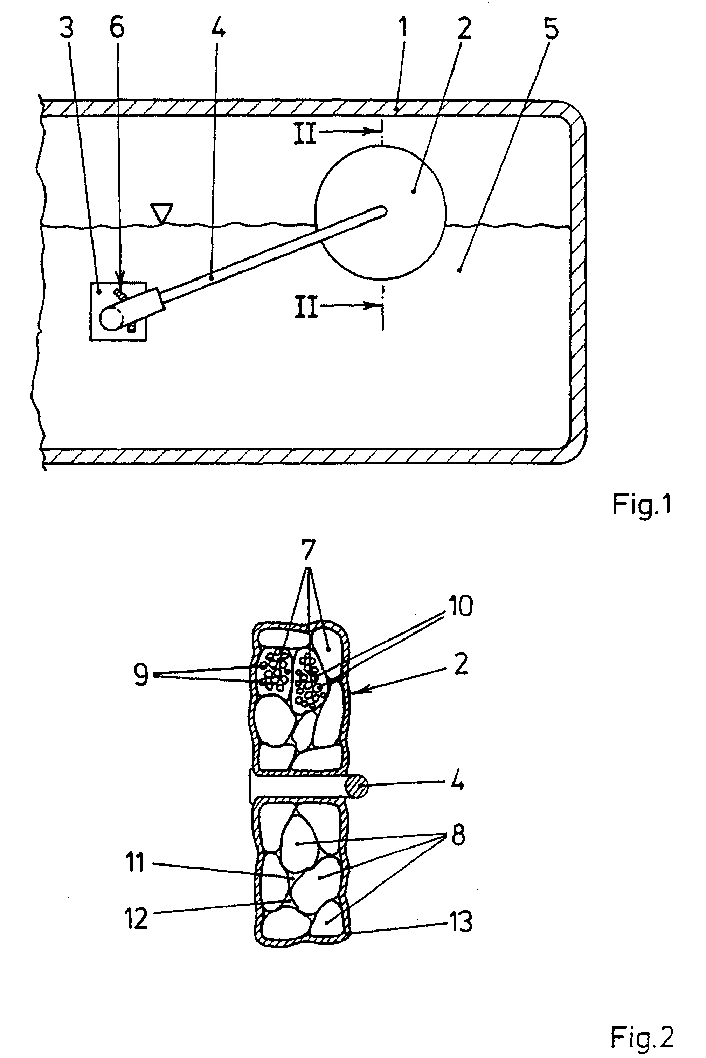

Figur 1 zeigt einen in einem Kraftstoffbehälter 1 eines Kraftfahrzeuges angeordneten Schwimmer 2. Der Schwimmer 2 ist auf einem in einem an einer Behälterwand befestigten Trägerteil 3 schwenkbar gelagerten Hebeldraht 4 angeordnet und folgt der Oberfläche bzw. dem Füllstand des Kraftstoffs 5 im Kraftstoffbehälter 1. Die Stellung des Hebeldrahtes 4 und damit die Position des Schwimmers 2 wird in bekannter Weise von einem auf dem Trägerteil 3 angeordneten Weg- oder Winkelaufnehmer 6 erfaßt und einer nicht dargestellten Auswerte- und Anzeigeeinheit zugeführt.

In einer Schnittdarstellung entlang der Linie II - II aus Figur 1 zeigt Figur 2, daß der Schwimmer 2 eine Vielzahl von miteinander warm verpreßten Kunststoff-Partikeln 7, 8 aufweist. Diese haben jeweils eine geschlossene Oberfläche und eine Vielzahl von Einschlüssen 9, 10 aus einem Treibmittel. Zur Vereinfachung der Zeichnung sind die Einschlüsse 9, 10 bei zwei Partikeln 7, 8 stellvertretend für alle Partikel 7, 8 dargestellt. Bei dem Treibmittel kann es sich beispielsweise um CO₂ und bei dem Kunststoff um POM handeln. Das spezifische Gewicht des Schwimmers 2 hängt im wesentlichen von dem Verhältnis der Größe und Anzahl der Einschlüsse 9, 10 zu der Menge des Kunststoffs ab. Weiterhin sind zwischen den Partikeln 7, 8 Lufteinschlüsse 11, 12 vorhanden, die zu dem besonders geringen spezifischen Gewicht des Schwimmers 2 beitragen. Damit kein Kraftstoff 5 in die Lufteinschlüsse 11, 12 eindringt, hat der Schwimmer 2 eine dünne Außenhaut 13 aus Kunststoff. Diese kann jedoch bei einer-nicht dargestellten - Ausführungsform des Schwimmers 2 entfallen, bei der die Lufteinschlüsse 11, 12 durch besonders festes Verpressen der Partikel 7, 8 weitgehend abgedichtet sind.

## Patentansprüche

1. Verfahren zum Herstellen eines Schwimmers aus einem kraftstoffbeständigen Kunststoff, mit dem eine breiige Masse aus Kunststoff im flüssigen Zustand bei hohem Druck mit einem Treibmittel oder einem das Treibmittel abgebenden Stoff hergestellt und anschließend verfestigt wird, **dadurch gekennzeichnet, daß** die Masse in Form kleiner Tropfen in einen freien Raum extrudiert und die Form des Schwimmers aus der verfestigten extrudierten Masse gefertigt wird.

2. Verfahren nach Anspruch 1, **dadurch gekennzeichnet, daß** die breiige Masse zu einem Strang extrudiert wird und anschließend dem Schwimmer entsprechende Stücke aus dem verfestigten Strang zugeschnitten werden.

3. Verfahren nach Anspruch 1, **dadurch gekennzeichnet, daß** die breiige Masse in Form kleiner Tropfen extrudiert wird und sich anschließend verfestigende Partikel zu der dem Schwimmer entsprechenden Form stoffschlüssig miteinander verbunden werden.

4. Verfahren nach zumindest einem der vorhergehenden Ansprüche, **dadurch gekennzeichnet, daß** die Partikel zu der vorgesehenen Form warm verpreßt werden.

5. Verfahren nach zumindest einem der vorhergehenden Ansprüche, **dadurch gekennzeichnet, daß** die Partikel zu einem Strang verbunden und anschließend der Form des Schwimmers entsprechende Stücke aus dem Strang herausgetrennt werden.

6. Verfahren nach zumindest einem der vorhergehenden Ansprüche, **dadurch gekennzeichnet, daß** der Schwimmer mit einem kraftstoffbeständigen Kunststoff überzogen wird.

## Claims

1. Method of producing a float from a fuel-resistant plastic, with which a pasty composition of plastic in the liquid state is prepared under high pressure with a blowing agent or a substance giving off the blowing agent and is subsequently made to solidify, **characterized in that** the composition is extruded in the form of small drops into a free space and the shape of the float is produced from the solidified extruded composition.

2. Method according to Claim 1, **characterized in that** the pasty composition is extruded into a strand and pieces corresponding to the float are subsequently cut out from the solidified strand.

3. Method according to Claim 1, **characterized in that** the pasty composition is extruded in the form of small drops and subsequently solidifying particles are cohesively bonded together to form the shape corresponding to the float.

4. Method according to at least one of the preceding claims, **characterized in that** the particles are pressed into the intended shape in a warm state.

5. Method according to at least one of the preceding claims, **characterized in that** the particles are bonded to form a strand and pieces corresponding to the shape of the float are subsequently cut out from the strand.

6. Method according to at least one of the preceding claims, **characterized in that** the float is coated with a fuel-resistant plastic.

## Revendications

1. Procédé de fabrication d'un flotteur en matière plastique résistant au carburant consistant à produire une masse pâteuse de matière plastique fluidifiée à haute pression en utilisant un agent propulseur ou une substance libérant un agent propulseur et à la durcir ensuite, **caractérisé en ce que** la masse est extrudée sous forme de petites gouttes dans un compartiment ouvert et que la forme du flotteur est réalisée à partir de la masse extrudée durcie.

2. Procédé selon la revendication 1, **caractérisé en ce que** la masse pâteuse est extrudée en un cordon et que les morceaux sont découpés ensuite à la taille du flotteur dans le cordon durci.

3. Procédé selon la revendication 1, **caractérisé en ce que** la masse pâteuse est extrudée sous forme de petites gouttes et qu'ensuite les particules en phase de durcissement sont réunies dans un moule correspondant au flotteur par conjugaison de matières.

4. Procédé selon au moins l'une des revendications précédentes, **caractérisé en ce que** les particules sont injectées par pression à chaud dans le moule prévu.

5. Procédé selon au moins l'une des revendications précédentes, **caractérisé en ce que** les particules sont assemblées en un cordon et que les pièces sont découpées ensuite dans le cordon à la forme correspondante du flotteur.

6. Procédé selon au moins l'une des revendications précédentes, **caractérisé en ce que** le flotteur est revêtu d'une matière plastique résistant au carburant.
